# EUROPÄISCHE PATENTANMELDUNG

(11) **EP 3 692 793 A1**
(43) Veröffentlichungstag der Anmeldung: **12.08.2020**
(21) Anmeldenummer: 20155387.2
(22) Anmeldetag: 04.02.2020
(51) Int. Cl.: A01M 29/10, A01M 29/16, A01M 29/18

(54) **WARNGERÄT ZUR VERRINGERUNG DES RISIKOS VON UNFÄLLEN DURCH WILDWECHSEL**

(30) Priorität: 06.02.2019 AT 600272019
(71) Anmelder: AMX Automation Technologies GmbH, 4040 Linz (AT)
(72) Erfinder: SCHWAIGER, Meinhard, 4040 LINZ (AT)
(74) Vertreter: Babeluk, Michael

(57) **Zusammenfassung**

Die Erfindung betrifft ein Warngerät (1) zur Verringerung des Risikos von Unfällen durch Wildwechsel, bestehend aus einem Gehäuse (2), einer Steuerung (3) einem optischen (5) und/oder einem akustischen Signalmodul (6), dadurch gekennzeichnet, dass das Warngerät (1) mit einem Detektor (11) zur Erkennung von Wildtieren und einem weiteren Detektor (4) zur Erkennung von Fahrzeugen ausgeführt ist und mittels eines Funkmoduls (9) in Fahrtrichtung (21 oder 22) des fahrenden Fahrzeuges beabstandet angeordnete Warngeräte (1', 1") aktivierbar sind und dass das Signalmodul (5, 6) nur durch entweder gemeinsam ein anderes Warngerät als auch den Detektor (11) oder den weiteren Detektor (4) als auch den Detektor (11) aktivierbar ist.

## Beschreibung

Die Erfindung betrifft ein verbessertes Warngerät zur Reduzierung des Risikos von Unfällen im Straßenverkehr, im Schienenverkehr oder an sonstigen Verkehrswegen verursacht durch Wildwechsel, die mit einer Fahrzeugerkennungseinrichtung, einer Signaleinrichtung, die für Wildtiere wahrnehmbare optische und/oder akustische Signale abgeben kann, einer Funkeinrichtung, einer Wildtiererkennungseinrichtung und einer optischen Warnanzeige bei Wildtiergefahr ausgeführt ist.

Die Erfindung betrifft auch ein Verfahren zum Betrieb derartiger Einrichtungen, bei der ein herannahendes Fahrzeug ein Signal auslöst, das in Fahrtrichtung eine Information an jeweils mehrere nächstfolgende Einrichtungen weiterleitet und die ein optisch / akustisches Signal so rechtzeitig aussenden, dass Wildtiere rechtzeitig eine Flucht in von der Straße / vom Verkehrsweg abgekehrte Richtung unternehmen können, sowie des Weiteren mittels einer Wildtiererkennungseinrichtung Wildtiere detektieren können und diese Information an mehrere benachbarte Einrichtungen weitergeben und ein für den Fahrer erkennbares optisches Warnsignal aussenden können.

Aus der US 2003/0071735 A1 (Randy Hanson), WO 2013/144312 A1 (IPTE Schalk & Schalk OG), US 2015/0070164 A1 (IPTE Schalk & Schalk OG) sind energieautarke Wildwarngeräte bekannt, ausgeführt mit Solarpanel und Speicherbatterie, die ein fahrendes Fahrzeug detektieren, diese Information mittels Funk an weitere Wildwarngeräte weiterleiten und ein temporäres optisches und oder ein hochfrequentes akustisches Signal zur Abschreckung von Wildtieren emittieren. Nachteilig dabei ist die Begrenzung des akustischen Signals auf ein bzw. zwei Frequenzen und das Fehlen einer Information an den Fahrer, ob in dem relevanten Straßenabschnitt Wildtiere anwesend sind, die aufgrund der ausgesendeten Signale den Streckenabschnitt nicht verlassen haben.

Aus der WO 2011/036684 A1 (Sgreccia Massimo) ist ein energieautarkes Funkalarm-System mit Überwachungsfunktion des Solarpanels bekannt. Nachteilig ist das Fehlen einer autarken Detektion von Wildtieren und die Aktivierung optischer Signale.

Aus der US 9,154,893 B1 (David S. Breed), der DE 199 55 102 A1 (Waldmann Günter) sind Systeme zum Erfassen und Auswerten von Umgebungsgeräuschen bekannt, die nach Auswertung zur Aktivierung eines Schallgenerators zur Abwehr von Tieren bzw. zur Identifikation von nicht sprachlichen Geräuschen verwendet werden. Nachteilig ist das Fehlen der Aktivierung optischer Signale und die Weiterleitung zur Aktivierung nachfolgender Warngeräte.

Aus der US 3,872,472 (Moschgat G. Robert), US 4,105,992 (David P. Luciano), US 5,602,523 (James Turchioe), CA 2,207,361 (Cudmore donald Glenn), WO 03/083218 A1 (De Ia Orden Bartolome, Jose Andres), ES 1 051 644 U (De Ia Orden Bartolome, Jose Andres), ES 2 545 157 (Rodriguez de Prado, Diego), EP 1 157 611 A1 (Kawaguchi Masahiro) sind einfachere Wildwarngeräte bekannt, die ein Fahrzeug detektieren und ein zeitlich begrenztes optisch und oder akustisches Signal zur Abwehr von Wildtieren erzeugen. Nachteilig ist das Fehlen der Weiterleitung der Information zur Aktivierung nachfolgender Warngeräte, sodass den Wildtieren die zur Flucht erforderliche Vorlaufzeit nicht zur Verfügung steht.

Die US 2017/0027157 A1 (William J. Purpura) offenbart ein System zum Schutz von nicht eingezäunten Bereichen gegen Eindringen von Tieren, das mit einem Sensor zum Erkennen von eindringenden Tieren und einem optischen und akustischen Signalgeber ausgeführt ist, wobei das akustische Signal ein Raubtiergeräusch imitiert. Nachteilig ist die Beschränkung auf ein streng begrenztes Überwachungsgebiet, die Beschränkung der Signalauslösung auf eindringe Tiere und die Limitierung des erzeugten akustischen Signales auf ein Raubtiergeräusch, sodass aufgrund von Gewöhnungseffekten die Wirksamkeit der Abwehrfunktion zeitlich begrenzt ist und für eine längerfristige Verwendung nicht geeignet ist.

Aus der US 4,525,790 (Masahiro Nakamura), DE 34 43 568 A1 (Landsrath Walter), DE 27 48 637 A1 (Moschgat Robert), DE 26 41 057 A1 (Woolf Lawrence Dudley), CN 102487937 A (Chuanyong Wei) sind Geräte zur Erzeugung von Ultraschallwellen mit konstanter oder variabler Frequenz bekannt, die zur Abwehr von Schädlingen geeignet sind. Nachteilig ist, dass die derart erzeugten Schallwellen zur Abwehr von größeren Wildtieren nicht geeignet sind und optische Signale fehlen.

Aus der DE 10 2005 034 854 A1 (Frietsch Andreas), DE 83 29 009 U1 (Bauch Horst Helmut), DE 10 2015 011 613 A1 (Raschke Jochen), DE 10 2015 011 045 A1 (Raschke Joachim), EP 2 962 559 A1 (Vollmer Marco), DE 10 2014 115 555 A1 (Pfitzenmaier Andreas), sind optische und akustische Geräte zum Verscheuchung von Wildtieren bei stehenden oder fahrenden Fahrzeugen bekannt. Nachteilig ist, dass die optischen bzw. akustischen Signale zum Vertreiben der Wildtiere vom Fahrzeug ausgesendet werden und bei Fahrzeugen im Fahrzustand den Wildtieren dabei nicht ausreichend Zeit zur Flucht zur Verfügung steht und die Geräte damit wirkungslos sind.

Aus der US 5,939,987 (Cram Randall), DE 41 40 662 C1 (Lötters Thomas), US 2002/0145519 A1 (Harald Hykawy), DE 10 2014 016 663 A1 (-), JPH 09250112 A (Imazu Ryuji) sind Warngeräte bekannt, die Wild im Randbereich von Fahrbahnen erkennen können und ein zeitlich begrenztes optisches Warnsignal mittels Blinkeinrichtung für den Fahrer und ein akustisches Signal zur Vertreibung des Wildes erzeugen können. Nachteilig bei diesen Geräten ist, dass die optischen und oder akustischen Signale ausschließlich von Wildtieren ausgelöst werden und nicht vom herannahenden Fahrzeug aktiviert werden, sodass aufgrund der allzu häufigen Signalauslösung ohne Fahrzeugbeteiligung eine sehr hohe Wahrscheinlichkeit für einen Gewöhnungseffekt auftritt und deshalb bei Wildtieren längerfristig keine Fluchtauslösung mehr auftritt und die Anlage wirkungslos sind.

Aus der DE 10 2014 115 555 A1 (Pfitzenmaier Andreas), US 2017/0102242 A1 (Breed S. David), US 2017/0249838 A1 (Breed S. David), EP 3 379 515 A1 (Sanche Francisco), DE 10 2011 102 759 A1 (Keilhofer Klaus), WO 2016/193837 A1 (Buttieri Michele), DE 10 2012 025 364 A1 (Bödeker Ralf), US 9,518,830 B1 (Breed S. David), DE 10 2013 226 648 A1 (Skowronek Alexander), DE 10 2014 207 399 A1 (Straßberger Markus) sind Verfahren und Systeme bekannt, die zur Erkennung von Tieren geeignet sind und den Fahrer mittels Navigationssystem mit update-Informationen über ein Verkehrsinformationssystem versorgen, sodass der Fahrer rechtzeitig über etwaige gefährliche Situationen gewarnt werden kann, oder in geeigneter Weise ein Fahrassistenzsystem beeinflussen, um das Risiko einer Kollision mit einem Tier zu verringern, oder zusätzlich ein optisches oder akustisches Warnsignal zum Vertreiben der Tiere aussenden. Nachteilig ist bei derartigen Systemen, dass die Wirksamkeit auf Fahrzeuge mit einem geeigneten Empfangsgerät/Navigationsgerät mit Update-Funktion bzw. auf Fahrzeuge mit einem geeigneten Fahrassistenzsystem begrenzt ist und ein geeignetes Verkehrsinformationssystem zur Datenerfassung, Datenverarbeitung und Informationsweitergabe vorhanden sein muss.

Aufgabe der Erfindung ist, ein Warngerät und ein Verfahren bereit zu stellen, das Wildtiere zuverlässiger und rechtzeitig in Gefahrenbereichen von Verkehrswegen vor herannahenden Fahrzeugen mittels optischer und akustischer Signale zur Flucht aus dem Gefahrenbereich veranlasst, den Fahrer über mögliche Gefahren aufgrund von Verharren der Wildtiere im Gefahrenbereich rechtzeitig mittels geeigneter Signale aufmerksam macht und das Risiko von Gewöhnungseffekten bei den Wildtieren möglichst gering hält.

Diese Aufgabe wird erfindungsgemäß dadurch gelöst, dass die Warngeräte mit einem System zur Detektion von fahrenden Fahrzeugen, mit einem System zur Weiterleitung der Information bzgl. des wahrgenommenen herannahenden Fahrzeuges an mehrere in Fahrtrichtung folgende Warngeräte und zur Auslösung einer Aktivierung dieser Warngeräte, mit einer Einrichtung zur Aussendung von optisch und akustisch für die Wildtiere wahrnehmbaren Warnsignale, mit einem System zur Detektion von im Überwachungsbereich anwesenden Wildtieren, mit einem System zur Weiterleitung der Information bzgl. wahrgenommener Wildtiere an vom fahrenden Fahrzeug aktivierte Warngeräte, mit einer Einrichtung zur Aussendung optischer Warnsignale an den Fahrer und energieautark ausgeführt ist.

Sie wird gemäß dem erfindungsgemäßen Verfahren auch dadurch gelöst, dass die Signale zur Fluchtauslösung bei den Wildtieren dem fahrenden Fahrzeug vorauseilend ausgesendet werden, um den Wildtieren ausreichend Zeit zur Flucht zu ermöglichen, dass die optischen und akustischen Signale auf die vorkommenden Wildtiere abgestimmt sind, dass die zur Fluchtauslösung ausgesendeten Signale nur dann ausgesendet werden, wenn ein fahrendes Fahrzeug detektiert worden ist, um Gewöhnungseffekte möglichst gering zu halten, und dass dem Fahrer die Anwesenheit von Wildtieren im Gefahrenbereich signalisiert wird.

Dabei wird als Warngerät ein energieautarkes Gerät bezeichnet, das in einem Gefahrenbereich, in dem ein als Wildwechsel bezeichnetes Queren von Verkehrsflächen durch Wildtiere vorkommt, in Abhängigkeit von der Einsehbarkeit und vom Gefährdungspotential definierten Abständen derart von der vom Verkehrsweg beabstandet montiert wird, dass ein fahrendes Fahrzeug von den Geräten detektiert werden kann, daraufhin ein Signal an jeweils weitere in Fahrtrichtung angeordnete Geräte weiterleitet, die ein zur Fluchtauslösung bei Wildtieren geeignetes temporäres optisches und akustisches Signal aussenden, mit einem zeitlichen Vorlauf, der den Wildtieren ausreichend Zeit zur Flucht ermöglicht und nicht vom Geräusch des fahrenden Fahrzeuges überlagert wird.

In einer weiteren bevorzugten Ausführungsvariante ist das Warngerät mit einem zusätzlichen Detektor ausgeführt, der die Anwesenheit von Wildtieren erkennen kann und mit einer zusätzlichen Signaleinrichtung ausgeführt, die den Fahrer vor der Gefahr von anwesenden Wildtieren warnen kann.

Als energieautark im Sinne des erfinderischen Gegenstandes wird ein Gerät bezeichnet, das mit elektrischer Energie versorgt ist, die mittels Solarzelle erzeugt wird, die Licht in elektrische Energie umwandelt und in einem Energiespeicher, vorzugsweise einem robusten, in einem weiten dem Einsatzort entsprechenden Temperaturbereich einsetzbaren Akkumulator oder Kondensator, zwischengespeichert wird.

Besonders vorteilhaft ist, wenn das Warngerät an Leitpfosten entlang von Verkehrswegen fixiert ist und/oder wenn das Warngerät entlang von Schienenanlagen vorgesehen ist.

Als Fahrzeug im Sinne der Erfindung gelten flurgebundene Fahrzeuge wie z.B. PKW, LKW, Traktor, Motorrad, Moped und Fahrrad sowie schienengebundene Fahrzeuge wie z.B. Eisenbahnen. Als Gefahrenbereich von Verkehrswegen gelten im Sinne der Erfindung Straßen, wie z.B. Hauptstraßen, Ortsstraßen, Schnellstraßen, Fernstraßen, Autobahnen, Güterwege und Schienenverkehrsanlagen, in dem ein als Wildwechsel bezeichnetes Queren von Verkehrsflächen durch Wildtiere vorkommt.

Die Erfindung wird im Folgenden anhand der Figuren näher erläutert. Es zeigen:
- Fig. 1: das erfindungsgemäße Warngerät in Schrägansicht von links oben, aus Richtung des herannahenden Fahrzeuges und der vom Verkehrsweg abgewandten Seite;
- Fig. 2: das erfindungsgemäße Warngerät in Schrägansicht von rechts oben, aus der der Fahrtrichtung entgegengesetzten Richtung und der vom Verkehrsweg abgewandten Seite;
- Fig. 3: das erfindungsgemäße Warngerät in perspektivischer Ansicht, montiert auf einem Leitpfosten in Fahrtrichtung gesehen;
- Fig. 4: das erfindungsgemäße Warngerät in perspektivischer Ansicht, montiert auf einem Leitpfosten in Ansicht entgegen der Fahrtrichtung gesehen;
- Fig. 5: das erfindungsgemäße Warngerät in einer Anordnung in einem überwachten Straßenabschnitt.

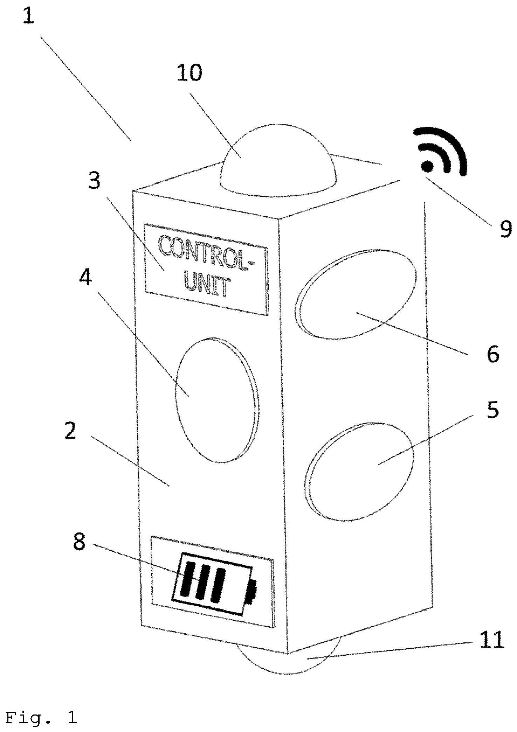

Die Fig. 1 zeigt das erfindungsgemäße Warngerät 1, bestehend aus dem Gehäuse 2, einer elektronischen Steuerung 3, einem Modul zur Detektion fahrender Fahrzeuge 4, einem Modul zur Aussendung eines optischen Signals 5 zur Fluchtauslösung bei Wildtieren, einem Modul zur Aussendung eines akustischen Signals 6 zur Fluchtauslösung bei Wildtieren, einem Energiespeichermodul 8, einem Funkmodul 9 zur Weitergabe und zum Empfang von Signalen an und von weiteren Warngeräten, einem Modul zur Aussendung eines Warnsignals 10 an den Fahrer und einem Modul zur Detektion von Wildtieren 11.

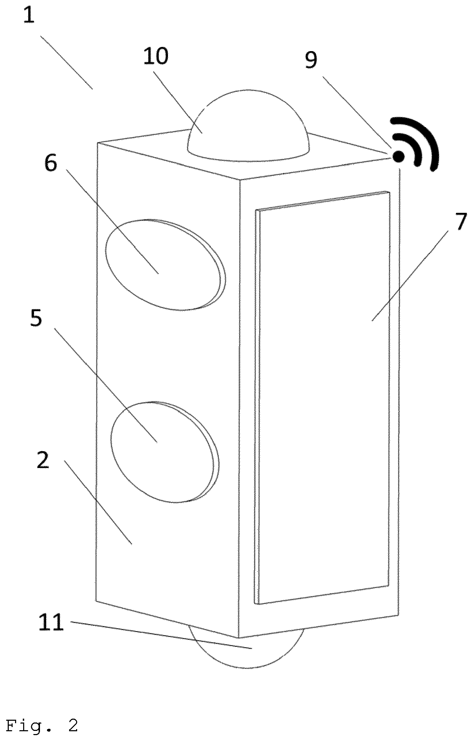

Die Fig. 2 zeigt das erfindungsgemäße Warngerät 1, bestehend aus dem Gehäuse 2, einem Modul zur Aussendung eines optischen Signals 5 zur Fluchtauslösung bei Wildtieren, einem Modul zur Aussendung eines akustischen Signals 6 zur Fluchtauslösung bei Wildtieren, einem Solarmodul 7 zur Umwandlung von Licht in elektrische Energie, einem Funkmodul 9 zur Weitergabe und zum Empfang von Signalen an und von weiteren Warngeräten, einem Modul zur Aussendung eines Warnsignals 10 an den Fahrer und einem Modul zur Detektion von Wildtieren 11.

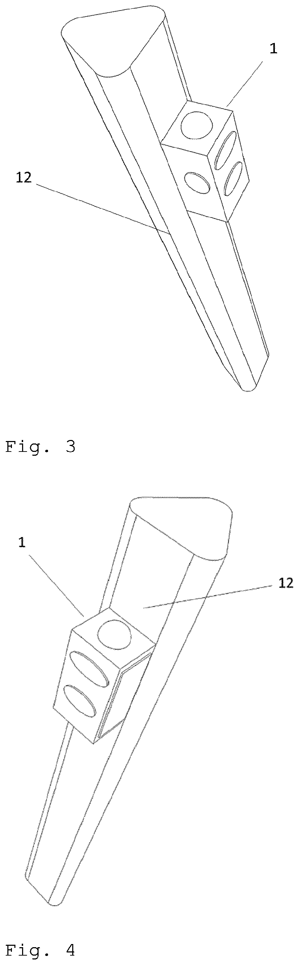

Die Fig. 3 zeigt eine bevorzugte Ausführungsvariante des erfindungsgemäßen Warngerätes 1 montiert auf einem Leitpfosten 12 aus Richtung des herannahenden Fahrzeuges und der vom Verkehrsweg abgewandten Seite gesehen.

Die Fig. 4 zeigt eine bevorzugte Ausführungsvariante des erfindungsgemäßen Warngerätes 1 montiert auf einem Leitpfosten 12 aus der der Fahrtrichtung entgegengesetzten Richtung und der vom Verkehrsweg abgewandten Seite aus, gesehen.

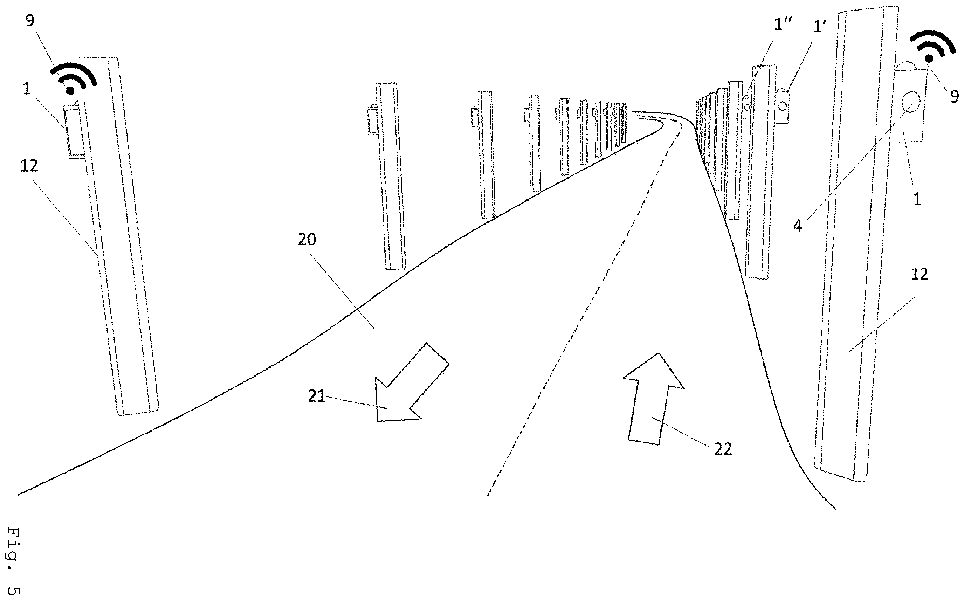

Die Fig. 5 zeigt eine bevorzugte Ausführungsvariante des erfindungsgemäßen Warngerätes 1, 1' montiert auf Leitpfosten 12, 12' zu beiden Seiten eines überwachten Straßenabschnittes 20 mit den Fahrtrichtungen 21 und 22. Die Warngeräte 1, 1' sind derart auf den Leitpfosten 12, 12' angeordnet, dass ein fahrendes Fahrzeug in Fahrtrichtung 22 von dem Modul zur Detektion fahrender Fahrzeuge 4 erfasst wird und diese Information an die nächstfolgenden Warngeräte 1, 1' mittels der Funkmodule 9, 9' in Fahrtrichtung 22 weitergegeben und von diesen empfangen wird, wobei die empfangenden Warngeräte 1, 1' dann jeweils ein temporäres optisches und oder akustisches Signal zur Fluchtauslösung bei den sich in diesen Abschnitten befindlichen Wildtieren auslösen. Dieser Vorgang wiederholt sich mit der Geschwindigkeit des fahrenden Fahrzeuges in Fahrtrichtung 22, das von jedem nächstfolgenden Warngerät auf der entsprechenden Straßenseite detektiert wird, bis zum Ende des überwachten Straßenabschnittes. Für ein sich in Fahrtrichtung 21 fortbewegendes Fahrzeug ist der Vorgang analog.

Das in den Figuren dargestellte erfindungsgemäße Warngerät 1, 1', 1" dient zur Reduzierung des Risikos von Unfällen im Straßenverkehr, im Schienenverkehr oder an sonstigen Verkehrswegen verursacht durch Wildwechsel, das mit einer Fahrzeugerkennungseinrichtung 4 zur Detektion von fahrenden Fahrzeugen, einer optischen Signaleinrichtung 5 und einer akustischen Signaleinrichtung 6, die für Wildtiere wahrnehmbare optische und/oder akustische Signale abgeben können, einer Funkeinrichtung 9, einer Wildtiererkennungseinrichtung 11 und einer optischen Warnanzeige 10, die bei Wildtiergefahr den Fahrer von der Anwesenheit von Wildtieren im überwachten Verkehrsbereich warnen kann, ausgeführt ist.

Ein bekanntes Problem betrifft das artspezifisch unterschiedliche Verhalten der Wildtiere in Gefahrensituationen. Das Fluchtverhalten wird von der Art der Wildtiere und deren Erfahrung geprägt. So wird das Fluchtverhalten bei Fluchttieren, wie z.B. bei vielen Huftieren, auch von Gewöhnungseffekten beeinflusst, wenn z.B. bestimmte optische und oder akustische Reize immer gleichbleibend und häufig ausgelöst werden, die keine unmittelbaren Konsequenzen zur Folge haben; in derartigen Fällen bleiben nach einer Gewöhnungsphase derartige optische oder akustische Signale wirkungslos und lösen keine Fluchtreaktionen aus. Auch das ruhige Verharren aufgrund einer Angstreaktion in einer Art schützender Deckungshaltung ist ein typisches Verhalten zahlreicher Wildtiere nach Auslösung optischer / akustischer Signale. Es ist auch bekannt, dass sich viele Wildtierarten an sehr lärmintensive Geräusche, ja sogar an Knallgeräusche von Schusswaffen gewöhnt haben und von den Wildtieren vielfach ignoriert werden. Es ist daher für die möglichst optimale Funktionsweise der Warngeräte 1 erforderlich, dass die Art, Dauer, Intensität und Vorlaufzeit der optischen bzw. akustischen Signale auf eine fluchtauslösende Wirkung bzw. auf eine Schutz suchende Wirkung in einem Deckung bietenden Bereich, bei den im überwachten Verkehrsabschnitt vorkommenden Wildtieren, optimal abgestimmt ist und aus einer Mehrzahl sich verändernder unterschiedlicher Signale, also einem Signal-Mix, besteht.

Die Erfindung betrifft auch ein Verfahren zum Betrieb derartiger Warngeräte 1, 1', 1" bei dem ein herannahendes Fahrzeug detektiert wird und ein Signal auslöst, das in Fahrtrichtung eine Information an jeweils mehrere nächstfolgende Warngeräte 1, 1', 1" weiterleitet und die dann ein optisch / akustisches Signal so frühzeitig aussenden, dass Wildtiere rechtzeitig eine Flucht in eine vom Verkehrsweg abgekehrte Richtung unternehmen können, oder in einer sicheren, schützenden Stelle verharren. Des Weiteren werden mittels eines Detektors 11 zum Erkennen von Wildtieren jene Wildtiere detektiert, die nicht den gefährdeten Straßenabschnitt verlassen haben, und diese Information wird an die aktivierten Warngeräte 1, 1', 1" weitergeleitet, die dann ein für den Fahrer erkennbares optisches Warnsignal mittels dem Warnsignalmodul 10 aussenden, ebenfalls in entsprechender Vorlaufzeit, die für eine ausreichende Einleitung einer Reaktionshandlung, bspw. der Reduktion der Fahrgeschwindigkeit, erforderlich ist.

### Bezugszeichenliste

- 1: Warngerät
- 2: Gehäuse
- 3: Steuerung
- 4: Detektor zur Erkennung bewegter Objekte (Fahrzeug, Eisenbahn, ...)
- 5: optisches Signalmodul
- 6: akustisches Signalmodul
- 7: Solarmodul
- 8: Energiespeichermodul
- 9: Funkmodul (Sender/Empfänger)
- 10: Warnsignalmodul
- 11: Detektor zur Erkennung von Wildtieren

## Patentansprüche

1. Warngerät (1) zur Verringerung des Risikos von Unfällen durch Wildwechsel, bestehend aus einem Gehäuse (2), einer Steuerung (3) einem optischen (5) und/oder einem akustischen Signalmodul (6), **dadurch gekennzeichnet, dass** das Warngerät (1) mit einem Detektor (11) zur Erkennung von Wildtieren und einem weiteren Detektor (4) zur Erkennung von Fahrzeugen ausgeführt ist und mittels eines Funkmoduls (9) in Fahrtrichtung (21 oder 22) des fahrenden Fahrzeuges beabstandet angeordnete Warngeräte (1', 1") aktivierbar sind und dass das Signalmodul (5, 6) nur durch entweder gemeinsam ein anderes Warngerät als auch den Detektor (11) oder den weiteren Detektor (4) als auch den Detektor (11) aktivierbar ist.

2. Warngerät (1) nach Anspruch 1, **dadurch gekennzeichnet, dass** die in Fahrtrichtung (21, 22) beabstandet angeordneten Warngeräte (1', 1") ein optisches Signalmodul (5) aufweisen.

3. Warngerät (1) nach einem der Ansprüche 1 oder 2, **dadurch gekennzeichnet, dass** die in Fahrtrichtung (21, 22) beabstandet angeordneten Warngeräte (1', 1") ein akustisches Signalmodul (6) aufweisen.

4. Warngerät (1) nach Anspruch 2, **dadurch gekennzeichnet, dass** das vom optischen Signalmodul (5) ausgesendete Warnsignal ein Lichtsignal ist, in einem Wellenlängenbereich von < 350 nm bis ca. 600 nm, vorzugsweise mit blaugrünen, blauen, violetten und ultravioletten Anteilen.

5. Warngerät (1) nach Anspruch 3 oder 4, **dadurch gekennzeichnet, dass** das vom akustischen Signalmodul (6) ausgesendete Warnsignal ein Schallsignal ist, dessen Wellenlänge in einem Wellenlängenbereich von 1 kHz bis 50 kHz, vorzugsweise 4 kHz bis 25 kHz liegt.

6. Warngerät (1) nach einem der Ansprüche 3 bis 5, **dadurch gekennzeichnet, dass** das vom akustischen Signalmodul (6) ausgesendete Warnsignal ein Schallsignal ist, dessen Schallpegel in einem Schallpegelbereich von 50 dB bis 150 dB, vorzugsweise 75 dB bis 90 dB liegt.

7. Warngerät (1) nach einem der Ansprüche 1 bis 6, **dadurch gekennzeichnet, dass** ein Warnsignalmodul (10) zur Erzeugung eines vom Fahrer wahrnehmbaren Signals vorgesehen ist.

8. Warngerät (1) nach einem der Ansprüche 1 bis 7, **dadurch gekennzeichnet, dass** die Energieversorgung autark ist und vorzugsweise aus einem Solarmodul (7) und einem Energiespeichermodul (8), vorzugsweise aus einem Akkumulator oder Kondensator, besteht.

9. Warngerät (1) nach Anspruch 8, **dadurch gekennzeichnet, dass** das Solarmodul (7), das Signalmodul (5), und das Warnsignalmodul (10) mit einer superhydrophoben Beschichtung ausgeführt sind, die eine Anhaftung von Regenwasser, Schnee und Eis verhindert.

10. Warngerät (1) nach einem der Ansprüche 1 bis 9, **dadurch gekennzeichnet, dass** das Warngerät (1) mit einer Diebstahlsicherung ausgerüstet ist, die eine Demontage erschwert oder verhindert oder zu einer Funktionsuntüchtigkeit nach einer Demontage führt.

11. Verfahren zum Betrieb von Warngeräten (1, 1', 1") nach einem der Ansprüche 1 bis 12, **dadurch gekennzeichnet, dass** von einem ersten Warngerät (1) ein herannahendes Fahrzeug detektiert wird und ein Signal auslöst, das in Fahrtrichtung (21, 22) eine Fahrzeuginformation an jeweils mehrere nächstfolgende Warngeräte (1', 1") weiterleitet und dass jedes Warngerät ein Warnsignal aussendet, wenn es ein Wildtier detektiert und zusätzlich entweder selbst ein Fahrzeug detektiert oder eine Fahrzeuginformation erhalten hat.

12. Verfahren nach Anspruch 11, **dadurch gekennzeichnet**, dass_die Anzahl der in Fahrtrichtung (21, 22) beabstandet angeordneten Warngeräte (1', 1") die mittels dem Funkmodul (9) aktiviert werden, eine Zeitspanne repräsentiert, die sich aus der Entfernung und der Fahrgeschwindigkeit ergibt, die den Wildtieren eine ausreichende Reaktionszeit, vorzugsweise 1 bis 10 Sekunden, zur Ausübung der Flucht aus dem Gefahrenbereich oder dem Aufsuchen einer sicheren Stelle für eine Deckungshaltung ermöglicht.

13. Verfahren nach Anspruch 11 oder 12, **dadurch gekennzeichnet, dass** die jeweils mehreren in Fahrtrichtung (21, 22) nächstfolgenden Warngeräte (1, 1', 1") ein optisches und/oder akustisches Signal aussenden.

14. Verfahren nach einem der Ansprüche 11 bis 13, **dadurch gekennzeichnet, dass** Wildtiere im gefährdeten Bereich des Verkehrswegs (20) von den Warngeräten (1, 1', 1") mittels des Detektors (11) zur Erkennung von Wildtieren detektiert werden.

15. Verfahren nach einem der Ansprüche 11 bis 14, **dadurch gekennzeichnet, dass** bei Detektion von Wildtieren im gefährdeten Bereich des Verkehrswegs (20) mittels dem Warnsignalmodul (10) ein für den Fahrer erkennbares optisches Warnsignal angezeigt wird.
